# NEUE EUROPÄISCHE PATENTSCHRIFT

(11) **EP 2 847 510 B2**
(45) Veröffentlichungstag und Bekanntmachung des Hinweises auf die Entscheidung über den Einspruch: **04.12.2019**
(45) Hinweis auf die Patenterteilung: 31.08.2016
(21) Anmeldenummer: 13728928.6
(22) Anmeldetag: 07.05.2013
(51) Int. Cl.: F21S 41/147, F21S 41/36, F21S 41/43, F21S 41/663

(54) **BELEUCHTUNGSVORRICHTUNG ZUR ERZEUGUNG EINER SEGMENTIERTEN LICHTVERTEILUNG**
HEADLAMP DEVICE GENERATING A SEGMENTED LIGHT DISTRIBUTION
APPAREIL D'ÉCLAIRAGE POUR LA RÉALISATION D'UNE DISTRIBUTION LUMINEUSE SEGMENTÉE

(30) Priorität: 09.05.2012 AT 501662012
(43) Veröffentlichungstag der Anmeldung: 18.03.2015
(73) Patentinhaber: ZKW Group GmbH, 3250 Wieselburg (AT)
(72) Erfinder: MOSER, Andreas, A-3350 Haag (AT); EICHINGER, Bernd, A-3250 Wieselburg (AT); FRANK, Heimo, A-3435 Zwentendorf (AT)
(74) Vertreter: Patentanwaltskanzlei Matschnig & Forsthuber OG
(86) Internationale Anmeldenummer: PCT/AT2013/050102
(87) Internationale Veröffentlichungsnummer: WO 2013/166537

(56) Entgegenhaltungen:
- EP-A1- 1 970 618
- EP-A1- 2 278 217
- EP-A2- 2 037 167
- EP-A2- 2 060 442
- EP-A2- 2 280 215
- EP-A2- 2 423 567
- DE-A1-102010 047 697
- US-A1- 2003 169 599

## Beschreibung

Die Erfindung betrifft eine Beleuchtungsvornchtung für ein Kraftfahrzeug, umfassend zwei oder mehrere Leuchteinheiten.

Weiters betrifft die Erfindung einen Scheinwerfer für ein Kraftfahrzeug, umfassend zumindest eine solche Beleuchtungsvorrichtung.

Schließlich betrifft die Erfindung noch ein Scheinwerfersystem mit einem linken und einem rechten Scheinwerfer zur Erzeugung einer Gesamtlichtverteilung.

Die Druckschriften EP 2 423 567 A2 und DE 10 2010 047 697 A1 offenbaren Beleuchtungsvorrichtungen zur Erzeugung mehreren Teil-Lichtverteilungen mit jeweils zumindest einer vertikalen Hell-Dunkel-Grenze.

Beleuchtungsvorrichtungen zur Erzeugung einer segmentierten Lichtverteilung sind bekannt. Jeder der Leuchteinheiten der Beleuchtungsvorrichtung erzeugt ein oder mehrere Lichtsegmente (Teil-Lichtverteilungen) der Lichtverteilung, durch gezieltes Ein- bzw. Ausschalten einzelner Leuchteinheiten können Segmente in der Lichtverteilung ausgeblendet, d.h. nicht beleuchtet werden, oder es können gezielt eines oder mehrere Segmente beleuchtet werden. Beispielsweise handelt es sich bei der segmentierten Lichtverteilung um eine Fernlichtverteilung (die gesamte Fernlichtverteilung wird dabei von zwei Beleuchtungsvorrichtungen, welche in einen linken und einen rechten Fahrzeugscheinwerfer eingebaut sind gebildet), welche aus horizontal neben einander liegenden Lichtsegmenten aufgebaut wird.

Es ist eine Aufgabe der Erfindung, eine konstruktiv einfache Beleuchtungsvorrichtung für diese Zwecke anzugeben.

Diese Aufgabe wird mit einer Beleuchtungsvorrichtung nach Anspruch 1 gelöst.

"Vertikal" bedeutet dabei, dass die HD-Grenze bei Projektion auf einen vor der Beleuch-tungsvorrichtung positionierten, vertikalen Schirm - z.B. in 25 oder 10 Metern Entfernung-vertikal verläuft. Im Lichtbild auf der Fahrbahn liegt diese HD-Grenze natürlich in einer in der Regel horizontalen Ebene. Für einen Fachmann ist dies ohnehin klar und soll hier lediglich zur Klarstellung dienen.

Grundsätzlich können dabei die Teil-Lichtverteilungen benachbarter Leuchteinheiten immittelbar aneinander angrenzend oder einander überlappend abgebildet werden.

Grenzen die Teil-Lichtverteilungen unmittelbar aneinander, was sich allerdings nur bei besonders geraden und scharfen HD-Grenzen realisieren lässt, können Segmente im Lichtbild optimal ausgeblendet werden.

In der Regel wird aber eine Variante bevorzugt, bei welcher die Teil-Lichtverteilungen einander überlappen. Auf diese Weise kann eine homogene Lichtverteilung mit der Beleuchtungsvorrichtung erzeugt werden und es bleibt, wenn der Überlappungsbereich entsprechend gewählt wird, immer noch ausreichend Spielraum zum Ausblenden einzelner Segmente bzw. zum gezielten Beleuchten bestimmter Segmente.

Erfindungsgemäß ist vorgesehen, dass zumindest einer der Reflektoren, vorzugsweise alle Reflektoren derart ausgebildet ist/sind, dass die Teil-Lichtverteilung(en) zwei vertikale Hell-Dunkel-Grenzen aufweist/aufweisen.

Die Schärfe der vertikalen Hell-Dumkel-Grenze(n) kann durch geeigneten Beschnitt der Reflektorfläche optimiert werden. Optimiert bedeutet in diesem Zusammenhang, dass die jeweilige HD-Grenze im Teil-Lichtbild möglichst gerade verläuft.

Nach Auslegung des Reflektors (auf eine möglichst gerade Hell-Dunkel-Linie) kann es zu Verzerrungen der Hell-Dunkel-Grenze kommen, d.h. zu einer von dem vertikalen Verlauf abweichenden Form; durch geeigneten Beschnitt des Reflektors im Bereich der die HellDunkel-Grenze erzeugenden Kante können solche abweichenden Verläufe gezielt entfernt werden, sodass sich eine geradlinige, vertikale Hell-Dunkel-Grenze ergibt.

Bei der Auslegung können entweder beide Kanten scharf ausgelegt werden oder nur eine der beiden Kanten - in letzterem Falle sind idealerweise die Imenkanten scharf ausgelegt, sodass die Außenkanten unscharf bleiben. In jedem ist es zweckmäßig, wenn bei nur einer scharfen Kante in einem Teil-Lichtbild alle Teil-Lichtbilder auf derselben Seite die scharfe Kante aufweisen.

Die "innere" Kante bzw. Hell-Dunkel-Grenze ist bei einem linken (rechten) Scheinwerfer jeweils die rechte (linke) vertikale Hell-Dunkel-Grenze der Segmentes der mit dem Scheinwerfer erzeugten Lichtverteilung, die "äußere" Kanten bzw. Hell-Dunkel-Grenzen sind bei einem linken (rechten) Scheinwerfer die jeweils linken (rechten) Kanten.

Unter "scharf" auslegen der Kante ist dabei zu verstehen, dass die von der Kante erzeugte Hell-Dunkel-Grenze im Lichtbild scharf abgebildet wird.

Die Bezeichnung "Kante scharf machen" bezieht sich dabei auf die Abbildung im Lichtbild, d.h. die Kante des Reflektors wird scharf abgebildet.

Dabei wird vorzugsweise die jeweils innere Hell-Dunkel-Grenze scharf abgebildet, während die äußerte Hell-Dunkel-Grenze weniger scharf abgebildet wird, damit in der Gesamtlichtverteilung ein gleichmäßiger, homogener Verlauf der Intensitätsverteilung nach außer hin erreicht wird.

Werden beide Kanten, d.h. beide vertikalen Hell-Dunkel-Grenzen scharf ausgeführt, kann die Homogenität der Gesamtlichtverteilung etwas vermindert sein, jedoch können mehr Ausblendszenarien realisiert werden.

Wird nur die Innenkante scharf ausgelegt und die Außenkante unscharf belassen, ist dies von Vorteil für die Homogenität der Gesamtlichtverteilung. Der weichere Auslauf und die in der Regel größere Breite der einzelnen Segmente (Teil-Lichtbilder) kann sich allerdings negativ auf die Ausblendszenarien auswirken, da unter Umständen mehr als nur ein Segment ausgeschaltet werden müssen.

Bei der Auslegung hat man somit in der Regel einen Kompromiss zwischen Homogenität des Lichtbildes und Schärfe der Kanten einzugehen.

Bei einer kostengünstigen und einfachen Variante ist vorgesehen, dass alle Leuchteinheiten ein von der Form her im Wesentliches identisches Teil-Lichtbild erzeugen. In diesem Fall können alle Reflektoren in der Regel identisch ausgebildet werden, sodass sich von der Fertigung her (nur eine Art von Reflektoren), Lagerhalterung etc. Vorteile ergeben-

Bei einer anderen Variante kann vorgesehen sein, dass die Reflektoren in Gruppen mit jeweils zumindest einem Reflektor unterteilt sind, und wobei die Reflektoren derart ausgebildet sind, dass alle Leuchteinheiten mit Reflektoren einer Gruppen ein von der Form her im Wesentliches identisches Teil-Lichtbild erzeugen, und sich die Teil-Lichtbilder von Leuchteinheiten mit Reflektoren aus unterschiedlichen Gruppen voneinander unterscheiden.

Auf diese Weise kann das mit einer Beleuchtungsvorrichtung erzeugte Lichtbild verbessert werden, und gleichzeitig kann die Anzahl an unterschiedlich geformten Reflektoren gering gehalten werden.

In Hinblick auf ein optimiertes Lichtbild der Beleuchtungsvorrichtung kann es allerdings auch noch von Vorteil sein, wenn die Reflektoren derart ausgebildet sind, dass alle Leuchteinheiten ein von der Form her voneinander unterschiedliches Teil-Lichtbild erzeugen.

Weiters kann vorgesehen sein, dass die reflektierende Fläche von einem, mehreren oder allen Reflektoren glatt ausgebildet ist.

"Glatt" bedeutet dabei, dass die reflektierende Fläche keine Unstetigkeiten aufweist. Auf diese Weise kann der Anteil an Streulicht gering gehalten werden, allerdings bestehen unter Umständen Einschränkungen in der Ausgestaltung der jeweiligen Teil-Lichtverteilung.

Es kann aber auch vorgesehen sein, dass die reflektierende Fläche von einem, mehreren oder allen Reflektoren segmentiert ausgebildet ist. Die Segmente können dabei vertikal und/oder horizontal und/oder quer verlaufend angeordnet sein.

Auch die Kombination von glatten und segmentieren Reflektoren ist grundsätzlich natürlich denkbar.

Durch eine Segmentierung wird eine freie Gestaltung der Lichtverteilung möglich und es ergibt sich eine höhere Anzahl an Freiheitsgraden bei der Erzeugung der Lichtverteilung.

Mit einem segmentierten Reflektor kann die jeweilige Teil-Lichtverteilung optimiert werden, an Kanten zwischen den Segmenten kann unter Umständen aber verstärkt Streulicht auftreten.

Weiters ist bei einer konkreten Ausführumgsform vorgesehen, dass die Lichtquellen der Leuchteinheiten jeweils zumindest eine, vorzugsweise zwei oder mehrere Leuchtdioden umfassen.

Insbesondere von Vorteil ist es, wenn die Lichtquellen der Leuchteinheiten unabhängig voneinander ansteuerbar sind. Auf diese Weise können die einzelnen Leuchteinheiten unabhängig voneinander ein- und ausgeschaltet, gegebenenfalls auch gedimmt werden, sodass sich die einzelnen Teil-Lichtverteilungen einzeln ein- und ausschalten lassen.

Weiters kann es noch von Vorteil sein, wenn in dem Fall, dass zwei oder mehrere Leuchtdioden für eine Lichtquelle vorgesehen sind, auch die Leuchtdioden unabhängig voneinander ansteuerbar sind oder die Leuchtdioden in Gruppen zusammengefasst sind, und die einzelnen Gruppen unabhängig voneinander ansteuerbar sind.

Jede Leuchteinheit erzeugt somit ein oder mehrere Segmente im Lichtbild, und auch diese einzelnen Segmente einer Leuchteinheit können dann entsprechend unabhängig von den anderen Segmenten gesteuert werden.

Durch Verwendung von mehreren LED-Chips, die jeder eine oder mehrere Leuchtdioden umfassen, für einen Reflektor können mehrere Lichtsegmente erzeugt werden. Dabei sind alle Reflektorsegmente allen LED Chips zugeordnet, d.h. in der Regel strahlt jede Leuchtdiode Licht im Wesentlichen auf den gesamten Reflektor an.

Beispielsweise ergibt eine Anordnung aus einem LED-Chip mit einem Reflektor (mit oder ohne Segmentierung) ein Segment in der Lichtverteilung.

Mehrere LED-Chips mit einem Reflektor (mit oder ohne Segmentierung), wobei die LED-Chips nicht getrennt ansteuerbar sind, ergibt ebenfalls genau ein Segment in der Lichtverteilung.

Mehrere LED-Chips, z.B. Eine Anzahl von x LED-Chips, mit einem Reflektor (mit oder ohne Segmentierung), wobei die LED-Chips getrennt ansteuerbar sind, lässt die Erzeugung von x Segmenten in der Lichtverteilung zu.

Wie oben schon erwähnt kann es weiters noch von Vorteil sein, wenn eine oder mehrere der Lichtquellen, insbesondere die Leuchtdioden der Lichtquellen dimmbar sind.

Insbesondere von Bedeutung kann es sein, wenn zumindest die äußeren Lichtquellen dimmbar sind. Die "äußeren" Lichtquellen (oder Leuchteinheiten) sind dabei jene, welche die äußeren Teil-Lichtverteilungen, also die von der Mitte der Lichtverteilung abgelegenen Teil-Lichtverteilungen erzeugen. Auf diese Weise kann der seitliche Auslauf der Lichtverteilung einer Beleuchtungsvorrichtung optimal gesteuert werden.

Hinsichtlich eines einfachen und standardisierten Aufbaus einer Beleuchtungsvorrichtung ist es von Vorteil, wenn alle Lichtquellen auf einem gemeinsamen Montagekörper angeordnet sind. Vorzugsweise ist dabei jede Lichtquelle auf einem Kühlkörper angebracht, Kühlkörper und darauf montierte Lichtquelle bilden entsprechend ein Gleichteil. Diese Gleichteile werden mit den entsprechenden Reflektoren ergänzt und auf dem Montagekörper befestigt.

Außerdem kann es noch von Vorteil sein, wenn der Lichtquelle einer Leuchteinheit jeweils zumindest eine Strahlenblende zugeordnet ist.

Eine optisch wirksame Blendenkante der Strahlenblende wird im Lichtbild abgebildet, sodass eine schärfere HD-Linie erzeugt werden kann. Außerdem wird Licht, welches nicht auf den Reflektor gelangt (in Folge der Ausstrahlcharakteristik der Leuchtdioden), von der Strahlenblende abgeschottet, sodass es nicht aus der Leuchteinheit austreten kann.

Der Reflektor wird so ausgelegt, dass auch ohne eine Strahlenblende eine scharfe Hell-Dunkel-Grenze im Lichtbild erzeugt wird. Die Strahlenblende wird eingesetzt, um die direkte Einsicht auf die Lichtquelle zu verhindern. Zusätzlich kann diese Strahlenblende durch geeignete Positionierung im Strahlengang und Formung verwendet werden um die Form der vertikalen Hell-Dunkel-Grenze zu verändern (optimieren). Zusätzlich können eine oder mehrere weitere Strahlenblenden in den Strahlengang eingebracht werden, um eine oder beide senkrechte Hell-Dunkel-Grenze zu formen (optimieren).

Zur Erzeugung einer segmentierten Lichtverteilung, wie etwa einer Fernlichtverteilung ist es von Vorteil, wenn die Reflektoren bzw. Leuchteinheiten in einer horizontalen Ebene angeordnet sind.

Bei einer Variante der Erfindung ist vorgesehen, dass die Leuchteinheiten gleich ausgerichtet sind.

Besonders vorteilhaft kann sich das Lichtbild einer Beleuchtungsvorrichtung erzeugen lassen, wenn die Leuchteinheiten in horizontaler Richtung zueinander verdreht sind.

Die Leuchteinheiten sind also jeweils um eine vertikale Achse, die sich vorzugsweise im Bereich der jeweiligen Leuchteinheit befindet, verdreht.

Durch unterschiedliche Verdrehwinkel der Leuchteinheiten können beispielsweise im zentralen Bereich des Lichtbildes kleinere Schrittweiten realisiert werden, d.h. Teil-Lichtbilder liegen näher beieinander und es kann auch vorkommen, dass mehr als zwei, z.B. drei Teil-Lichtbilder gemeinsam miteinander überlappen. Auf diese Weise kann eine höhere Auflösung im zentralen Bereich realisiert werden, d.h. es können kleinere Segmente im Lichtbild ausgeblendet werden, als im äußeren Bereich. Außerdem kann die maximale Beleuchtungsstärke im zentralen Bereich dadurch erhöht werden.

Eine Optimierung der Lichtverteilung ist auch möglich, wenn mehrere unterschiedliche Reflektoren verwendet werden.

Insbesondere ist dabei vorgesehen, dass vorzugsweise jeweils die gesamten Leuchteinheiten, umfassend die Lichtquelle(n), Reflektor und gegebenenfalls zumindest eine Blende verschwenkt sind. Dies hat fertigungstechnischer Vorteile in Hinblick auf eine rasche Fertigung und spart dementsprechend Kosten.

Es kann aber auch vorgesehen sein, dass alle Lichtquellen gleich ausgerichtet bzw. vorab fix montiert sind und nur die Reflektoren zueinander verdreht sind bzw. die Reflektoren verdreht zu der fixen Anordnung montiert werden. Dies ist in der Fertigung zwar aufwändiger, allerdings können hierbei Fertigungstoleranzen besser ausgeglichen werden.

Um die Abschattung durch die LED Abdeckung möglichst gering zu halten, ist es von Vorteil, den Strahlengang der einzelnen Leuchteinheiten überkreuzt auszulegen. Die Auslegung als Kreuzstrahler wirkt sich außerdem positiv auf den Wirkungsgrad aus, da sie zu einer besseren Umschließung der Lichtquelle führt. Eine bessere Umschließung bedeutet, dass der Reflektor einen größere Raumwinkel der Abstrahlung der Lichtquelle, insbesondere der LED-Abstrahlung ausnutzen kann.

Dabei kann beispielsweise vorgesehen sein, dass beginnend bei einer äußeren Leuchteinheit bei einem Fortschreiten zu der inneren Leuchteinheit der Grad der Verdrehung zunimmt.

Die erfindungsgemäße Aufgabe wird außerdem mit einem Scheinwerfer gelöst, welcher zumindest eine oben beschriebene Beleuchtungsvorrichtung beinhaltet.

Bei einem eingangs erwähnten, erfindungsgemäßen Scheinwerfersystem kann außerdem vorgesehen sein, dass der linke Scheinwerfer den linken Teil der Gesamtlichtverteilung und der rechte Scheinwerfer den rechten Teil der Gesamtlichtverteilung erzeugt.

Vorzugsweise überlappen dabei der linke und der rechte Teil der Gesamtlichtverteilung - in horizontaler Richtung gesehen - in der Mitte.

Beispielsweise liegt der Überlappungsbereich von linker und rechter Lichtverteilung bei ca. 3° in horizontaler Richtung. Je größer der Überlappungsbereich ist, umso schwieriger sind in diesem Überlappungsbereich Segmente im Gesamtlichtbild (vollständig) ausblendbar.

Im Folgenden ist die Erfindung an Hand der Zeichnung näher erläutert. In dieser zeigt
Fig. 1 eine perspektivische Ansicht einer erfindungsgemäßen Beleuchtungsvorrichtung von schräg Vorne,
Fig. 2 die Beleuchtungsvorrichtung aus Figur 1 in einer anderen perspektivischen Ansicht von schräg Vorne,
Fig. 3 die Beleuchtungsvorrichtung aus Figur 1 von Vorne,
Fig. 4 die Beleuchtungsvorrichtung aus Figur 1 von Oben,
Fig. 5 eine schematische Ansicht einer Leuchteinheit von Oben,
Fig. 6 eine schematische Ansicht der Leuchteinheiten einer Beleuchtungsvorrichtung von Oben,
Fig. 7 die Teil-Lichtverteilungen erzeugt mit einer Beleuchtungsvorrichtung,
Fig. 8 eine Leuchteinheit aus Figur 6 mit zwei Strahlenblenden,
Fig. 9 eine Leuchteinheit mit aufgeweitetem Strahlengang und zwei Strahlenblenden,
Fig. 10 eine Gesamtlichtverteilung erzeugt mit zwei Beleuchtungsvorrichtungen und mit ausgeblendetem Segment, und
Fig. 11 die Gesamtlichtverteilung aus Figur 8, mit einem anderen ausgeblendeten Segment.

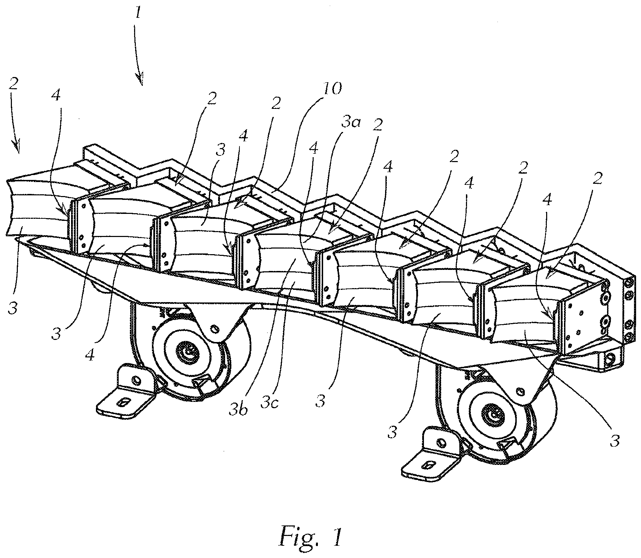

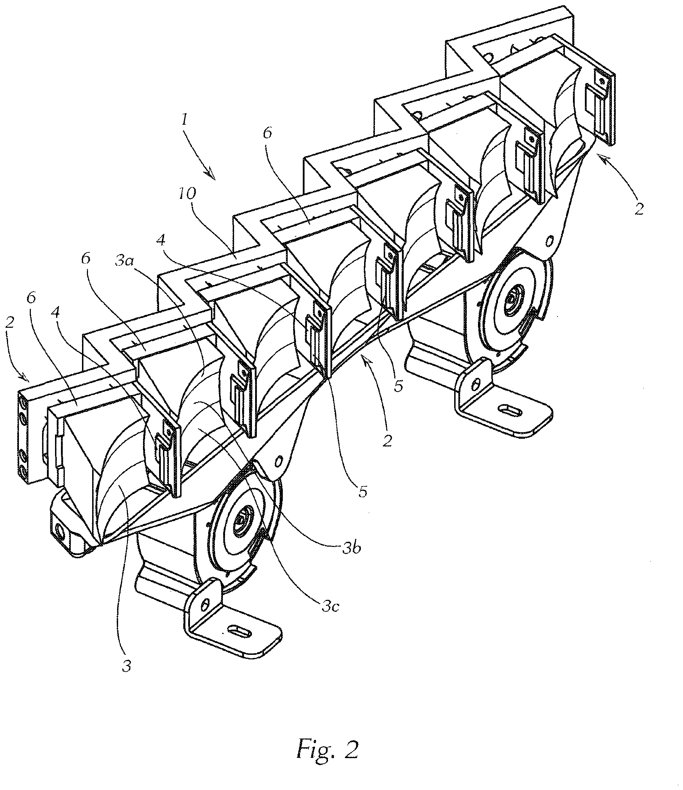

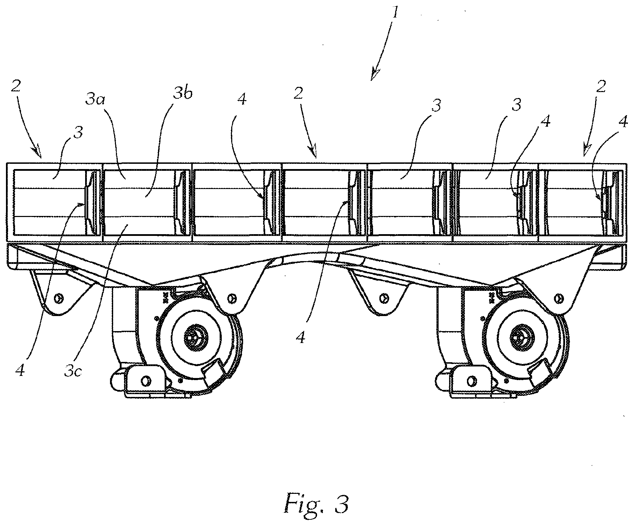

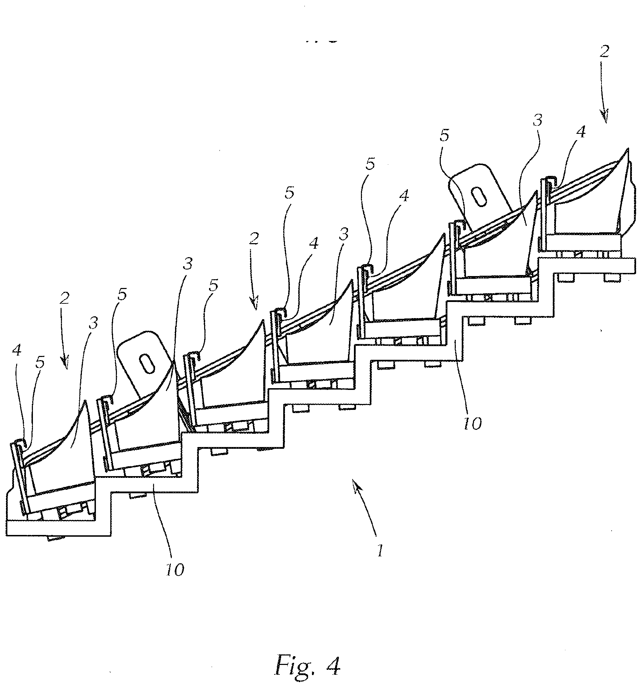

Die Figuren 1 - 4 zeigen in unterschiedlichen Ansichten eine erfindumgsgemäße Beleuchtungsvorrichtung 1 für ein Kraftfahrzeug, welche in dem gezeigten Beispiel sieben Leuchteinleiten 2 unfasst.

Die Figuren zeigen dabei eine linke Beleuchtungsvorrichtung, zusammen mit einer rechten Beleuchtungsvorrichtung erzeugt diese Scheinwerfereinrichtung eine Gesamtlichtverteilung für ein Kraftfahrzeug.

Jede Leuchteinheit 2 umfasst einen Reflektor 3 sowie eine dem Reflektor 3 zugeordnete Lichtquelle 4, sodass Licht aus der Lichtquelle 4 über den zugeordneten Reflektor 3 - im eingebauten Zustand der Beleuchtungsvorrichtung 1 - in einen Bereich vor dem Fahrzeug abgestrahlt wird.

Die reflektierenden Flächen der Reflektoren können glatt ausgebildet sein. Bei der gezeigten Ausführumgsform sind die Reflektoren 3, d.h. deren reflektierende Flächen segmentiert ausgebildet ist. In der Darstellung nach den Figuren 1 - 4 sind dabei die reflektierenden Flächen in jeweils drei horizontale Segmente 3a, 3b, 3c segmentiert.

Wie in den Figuren gut zu erkennen ist, liegen die Reflektoren seitlich von den Lichtquellen, direkt den Lichtquellen gegenüber. Die Lichtquellen strahlen ihr Licht im Wesentlichen quer, ca. unter 90 Grad zur Hauptabstrahlrichtung ab (bzw. liegt bei Lichtquellen in Form von LEDs deren 0-Grad-Abstrahlrichtung ca. unter 90 Grad zu der Hauptabstrahlrichtung der Leuchteinheit).

Die Lichtquellen 4 der Leuchteinheiten 3 umfassen jeweils zumindest eine, vorzugsweise zwei oder mehrere Leuchtdioden, bei der gezeigten Variante sind die Lichtquellen stehend angeordnet, d.h. die Lichtaustrittsflächen liegen in einer vertikalen Ebene, die Reflektoren 3 werden also von der Seite mit Licht gespeist.

Jede Leuchteinheit 2 bildet eine Teil-Lichtverteilung, und die Teil-Lichtverteilungen der sieben Leuchteinheiten 2 bilden eine (Gesamt-) Lichtverteilung der Beleuchtungsvorrichtung 1.

Die Teil-Lichtverteilungen der einzelnen Leuchteinheiten 2 sind dabei in horizontaler Richtung nebeneinander angeordnet, und die Reflektoren 3 der Leuchteinheiten 2 sind derart ausgebildet, dass die Teil-Lichtverteilungen der Leuchteinheiten 2 jeweils zumindest eine scharf abgebildete vertikale Hell-Dunkel-Grenze aufweisen.

"Vertikal" bedeutet dabei, dass die HD-Grenze bei Projektion auf einen vor der Beleuchtungsvorrichtung positionierten, vertikalen Schirm - z.B. in 25 oder 10 Metern Entfernung - vertikal verläuft. Im Lichtbild auf der Fahrbahn liegt diese HD-Grenze natürlich in einer in der Regel horizontalen Ebene. Für einen Fachmann ist dies ohnehin klar und soll hier lediglich zur Klarstellung dienen.

Die Lichtquellen 4 der einzelnen Leuchteinheiten 3 sind unabhängig voneinander ansteuerbar. Auf diese Weise können die einzelnen Leuchteinheiten unabhängig voneinander einund ausgeschaltet, gegebenenfalls auch gedimmt werden, sodass sich die einzelnen TeilLichtverteilungen der Leuchteinheiten einzeln ein- und ausschalten lassen.

Weiters kann es noch von Vorteil sein, wenn in dem Fall, dass zwei oder mehrere Leuchtdioden für eine Lichtquelle vorgesehen sind, auch die Leuchtdioden einer Lichtquelle unabhängig voneinander ansteuerbar sind oder die Leuchtdioden einer Lichtquelle in Gruppen zusammengefasst sind, und die einzelnen Gruppen unabhängig voneinander ansteuerbar sind.

Beispielsweise kann eine Lichtquelle ein oder mehrere LED-Chips mit jeweils einer oder mehreren Leuchtdioden aufweise. Die Chips sind getrennt ansteuerbar bzw. schaltbar.

Jede Leuchteinheit erzeugt somit ein oder mehrere Segmente im Lichtbild (je nach Anzahl der unabhängig ansteuerbaren Chips), und auch diese einzelnen Segmente einer Leuchten-heit können dann entsprechend unabhängig von den anderen Segmenten gesteuert werden.

Durch Verwendung von mehreren LED-Chips (von denen jeder eine oder mehrere Leuchtdioden umfasst) für einen Reflektor können mehrere Lichtsegmente erzeugt werden. Dabei sind alle Reflektorsegmente allen LED Chips zugeordnet, d.h. in der Regel strahlt jede Leuchtdiode Licht im Wesentlichen auf den gesamten Reflektor ab.

Beispielsweise ergibt eine Anordnung aus einem LED-Chip mit einem Reflektor (mit oder ohne Segmentierung) genau ein Segment in der Lichtverteilung.

Mehrere LED-Chips mit einem Reflektor (mit oder ohne Segmentierung), wobei die LED-Chips nicht getrennt ansteuerbar sind, ergeben ebenfalls genau ein Segment in der Lichtver-teilung.

Die Verwendung mehrerer LED-Chips, z.B. eine Anzahl von x LED-Chips, mit einem Reflektor (mit oder ohne Segmentierung), wobei die LED-Chips getrennt ansteuerbar sind, lässt die Erzeugung von x Segmenten in der Lichtverteilung zu.

Je nach Anordnung der Segmente auf dem Reflektor können diese z.B. nebeneinander oder übereinander liegende Segmente in der Lichtverteilung bilden.

Hinsichtlich der Dimmbarkeit der Lichtquellen kann es insbesondere von Vorteil sein, wenn zumindest die äußeren Lichtquellen diminbar sind. Die "äußeren" Lichtquellen (oder Leuchteinheiten) sind dabei jene, welche die äußeren Teil-Lichtverteilungen, also die von der Mitte der Lichtverteilung abgelegenen Teil-Lichtverteilungen erzeugen. Auf diese Weise kann der seitliche Auslauf der Lichtverteilung einer Beleuchtungsvorrichtung optimal gesteuert werden.

Hinsichtlich eines einfachen und standardisierten Aufbaus einer Beleuchtungsvorrichtung ist es von Vorteil, wenn wie in den Figuren 1 - 4 dargestellt alle Lichtquellen 4 auf einem gemeinsamen Montagekörper 10 angeordnet sind. Vorzugsweise ist dabei jede Lichtquelle 4 auf einem eigenen Kühlkörper 6 angebracht, Kühlkörper 6 und darauf montierte Lichtquelle 4 bilden entsprechend ein Gleichteil. Diese Gleichteile werden mit den entsprechenden Reflektoren 3 ergänzt und auf dem Montagekörper 10 befestigt.

Außerdem kann es noch von Vorteil sein, wenn der Lichtquelle 4 einer Leuchteinheit 2 jeweils zumindest eine Strahlenblende 5 zugeordnet ist.

Eine optisch wirksame Blendenkante der Strahlenblende wird im Lichtbild abgebildet, sodass eine schärfere HD-Linie erzeugt werden kann. Außerdem wird Licht, welches nicht auf den Reflektor gelangt (in Folge der Ausstrahlcharakteristik der Leuchtdioden), von der Strahlenblende abgeschottet, sodass es nicht aus der Leuchteinheit austreten kann.

Der Reflektor wird so ausgelegt, dass auch ohne eine Strahlenblende eine scharfe Hell-Dunkel-Grenze im Lichtbild erzeugt wird. Die Strahlenblende wird eingesetzt, um die direkte Einsicht auf die Lichtquelle zu verhindern. Zusätzlich kann diese Strahlenblende durch geeignete Positionierung im Strahlengang und Formung verwendet werden um die Form der vertikalen Hell-Dtmkel-Grenze zu verändern (optimieren). Zusätzlich können eine oder mehrere weitere Strahlenblenden in den Strahlengang eingebracht werden, um eine oder beide senkrechte Hell-Dunkel-Grenze zu formen (optimieren).

Bei der in den Figuren 1 - 4 gezeigten Variante ist genau eine solche Strahlenblende 5 vorgesehen.

Zur Erzeugung einer segmentierten Lichtverteilung, wie etwa einer Fernlichtverteilung ist es von Vorteil, wenn die Reflektoren 3 bzw. Leuchteinheiten 2 wie dargestellt in einer horizontalen Ebene angeordnet sind. Die Reflektoren 3 bzw. die Leuchteinheiten 2 sind weiters wie beispielhaft gezeigt nebeneinander, in einer Reihe angeordnet und in Lichtaustrittsrichtung zueinander versetzt.

Grundsätzlich können dabei die Teil-Lichtverteilungen benachbarter Leuchteinheiten 2 unmittelbar aneinander angrenzend oder einander überlappend abgebildet werden.

Bei der gezeigten Ausführumgsform ist eine bevorzugte Variante gezeigt, bei welcher die Teil-Lichtverteilungen einander überlappen. Auf diese Weise kann eine homogene Lichtverteilung mit der Beleuchtungsvorrichtung erzeugt werden und es bleibt, wenn der Überlappungsbereich entsprechend gewählt wird, immer noch ausreichend Spielraum zum Ausblenden einzelner Segmente bzw. zum gezielten Beleuchten bestimmter Segmente.

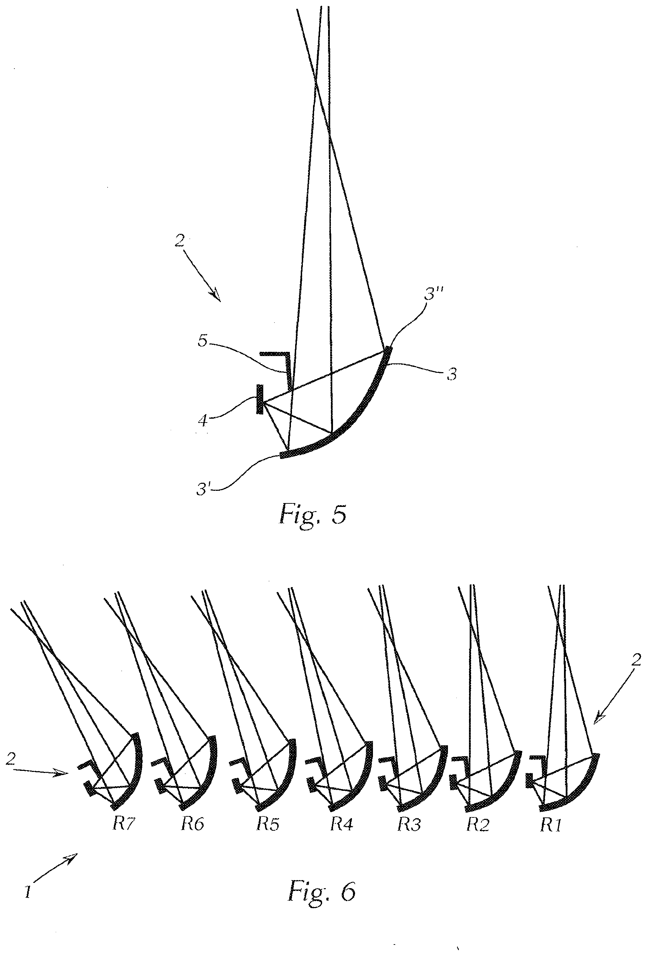

Figur 5 zeigt eine Leuchteneinheit 2 mit Reflektor 3, Lichtquelle 4 und Strahlenblende 5 in einer schematischen Ansicht von oben. Eine solche Leuchteneinheit 2 kommt in einer Beleuchtungsvorrichtung 1 (im Folgenden als Scheinwerfer 1 bezeichnet) wie in Figur 6 gezeigt zum Einsatz. Figur 6 zeigt einen linken Scheinwerfer zur Erzeugung des linken Teiles einer Gesamtlichtverteilung, wie dies weiter unten noch erörtert wird.

Bei dem Reflektor 3 handelt es sich um einen Kreuzstrahler, wie dies an Hand des eingezeichneten Strahlenganges gut zu erkennen ist. Bei dem gezeigten Reflektor 3 wird die Reflektorkante 3' scharf im Teil-Lichtbild als vertikale Hell-Dunkel-Grenze abgebildet, wobei - betrachtet man die Anordnung in Lichtaustrittsrichtung - diese Kante 3' links liegt und im Lichtbild in Folge der kreuzenden Strahlen als rechte, innere vertikale Hell-Dunkel-Grenze abgebildet wird. Die linke Seite der Teil-Lichtverteilung wird weniger scharf abgebildet.

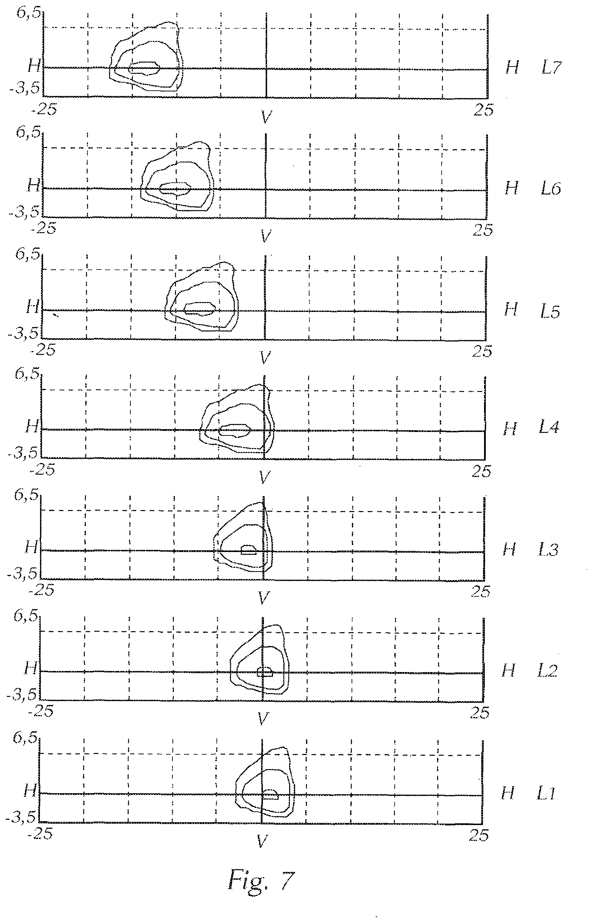

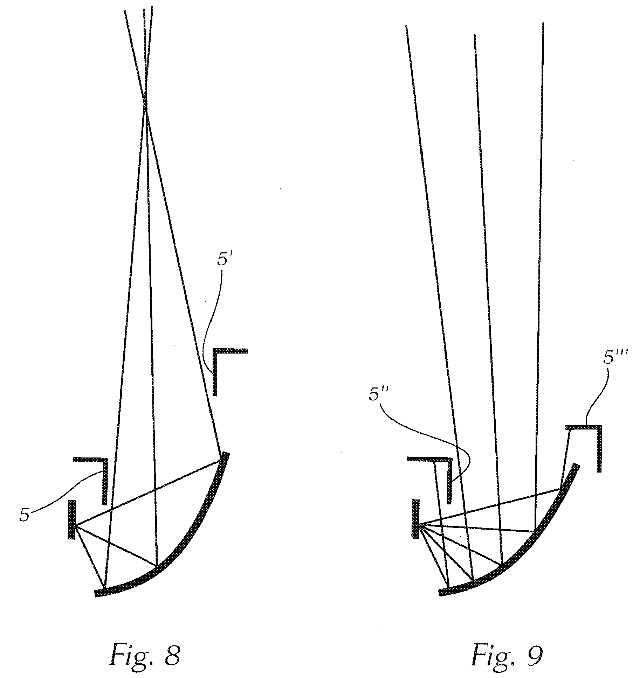

Figur 7 zeigt die Teil-Lichtverteilungen L1 - L7, welche mit den einzelnen Leuchteinheiten, wie sie in Figur 6 dargestellt sind, erzeugt werden. Die Leuchteinheiten sind hier noch extra mit den Bezugszeichen R1 - R7 gekennzeichnet, wobei eine Leuchteinheit Ri (i = 1 - 7) eine Teil-Lichtverteilung Li (i = 1 - 7)in Figur 8 erzeugt.

Wie in Figur 7 zu erkennen ist, weisen die Teil-Lichtverteilungen L1 - L7 scharfe, relativ geradlinig vertikal verlaufende rechte Hell-Dunkel-Grenzen auf, welche mittels der linken Reflektorkanten 3' (siehe Figur 5) erzeugt werden, während auf der linken Seite die TeilLichtverteilungen L1 - L7 einen nach links hin auslaufenden Verlauf aufweisen; die rechte Kante 3" des Reflektors 3 wird also bei dieser Ausführumgsform weniger scharf abgebildet.

Um im inneren Bereich in der Gegend um HV eine höhere Intensität der Lichtverteilung und eine feinere Überlagerung der Teil-Lichtverteilungen zu erreichen, sind vorteilhafterweise wie gezeigt die "inneren" Lichtverteilungen L1 - L3 in horizontaler Erstreckung schmäler als die äußeren Lichtverteilungen L4 - L7, und ihr Zentrum liegt horizontaler Richtung weniger weit aufeinander als jenes der Lichtverteilungen L4 - L7. Dazu sind bei der gezeigten Variante die Leuchteinheiten in horizontaler Richtung zueinander verdreht, und zwar um eine vertikale Achse, die sich vorzugsweise im Bereich der jeweiligen Leuchteinheit befindet bzw. durch die Leuchteinheit verläuft.

Konkret strahlen die Leuchteinheiten R1 - R3 in einer erste Richtung, die Leuchteinheiten R4 - R7 sind zu dieser ersten Richtung verdreht und diese Leuchteinheiten strahlen Licht schräg zu den Leuchteinheiten R1 - R3 ab. Entsprechend sind die Teil-Lichtverteilungen L1 - L3 schmäler als die Lichtverteilungen L4 - L7, außerdem sind die Lichtverteilungen R1 - R3 feiner gerastert.

Durch die unterschiedlichen Verdrehwinkel der Leuchteinheiten können somit im zentralen Bereich des Lichtbildes kleinere Schrittweiten realisiert werden, d.h. Teil-Lichtbilder liegen näher beieinander und es kann auch vorkommen, dass mehr als zwei, z.B. drei Teil-Lichtbilder gemeinsam miteinander überlappen. Auf diese Weise kann eine höhere Auflösung im zentralen Bereich realisiert werden, d.h. es können kleinere Segmente im Lichtbild ausgeblendet werden, als im äußeren Bereich. Außerdem kann die maximale Beleuchtungsstärke im zentralen Bereich dadurch erhöht werden.

Es können prinzipiell identisch aufgebaute Leuchteinheiten mit identischen Reflektoren verwendet werden. Es können aber auch unterschiedlich ausgestaltete Reflektoren verwendet werden. Eine optimale Anpassung ist naturgemäß dann möglich, wenn eine große Anzahl an unterschiedlichen Reflektoren verwendet wird. Um die Anzahl der Werkzeuge und somit die Kosten und außerdem die Bauteilvielfalt gering zu halten, wird allerdings danach getrachtet, eine möglichst geringe Anzahl an unterschiedlichen Reflektoren, z.B. 2 unterschiedliche Arten von Reflektoren zu verwenden.

Bei der Auslegung ist außerdem Rücksicht auf Bauraum und Performance zu nelunen. Größere Reflektoren erzeugen ein höheres Maximum und weisen eine höhere Effizienz auf, während kleinere Reflektoren vorteilhaft für eine Bauraumreduktion sind.

Für den zentralen Bereich der Lichtverteilung einer Beleuchtungsvorrichtung sind breitere Reflektoren von Vorteil, die ein schmäleres Lichtbild mit höherer Intensität erzeugen und eine feinere Überlagerung der einzelnen Segmente der Lichtverteilung erlauben, während im äußeren Bereich der Lichtverteilung vorzugsweise sclunälere Reflektoren für ein breiteres Lichtbild für breitere Ausleuchtung verwendet werden, wie dies auch bei der in den Figuren gezeigten Variante der Fall ist. Durch die geringere Breite der Reflektoren kann der benötigte Bauraum außerdem reduziert werden.

Noch einmal zurück kommend auf Figur 5 zeigt diese eine Leuchteinheit 2, deren Reflektor 3 als Kreuzstrahler ausgebildet ist. Die Strahlenblende 5 verhindert eine direkte Einsicht auf die Lichtquelle 4. Dadurch wird verhindert, dass Streulicht außerhalb der gewünschten TeilLichtverteilung erzeugt wird, welches z.B. im Teilfernlichtbetrieb zur Blendung des Gegenverkehrs führen kann.

Diese Strahlenblende 5 kann durch geeignete Auslegung (Position und Kontur der Kante) genutzt werden, um die vertikale HD Linie der Lichtverteilung zu formen, d.h. zu optimieren (schärfer zu gestalten).

Im Falle eines überkreuzten Strahlengangs wie in Figur 5 gezeigt wird jeweils die der Strahlenblende gegenüberliegende Hell-Dunkel-Grenze der Lichtverteilung beeinflußt, also in diesem Fall die rechte Hell-Dunkel-Grenze der Teil-Lichtverteilung.

Zusätzlich kann eine zweite Strahlenblende 5' verwendet werden, um auch die zweite vertikale Hell-Dunkel-Grenze zu optimieren/schärfen (siehe Figur 8).

Figur 9 zeigt schließlich noch eine Leuchteinheit, deren Reflektor einen aufgeweiteten Strahlengang erzeugt. Verwendet man hier Strahlenblenden 5", 5'", so wird von diesen jeweils die auf der Seite der Strahlenblende liegende Hell-Dunkel-Grenze der Lichtverteilung beeinflusst.

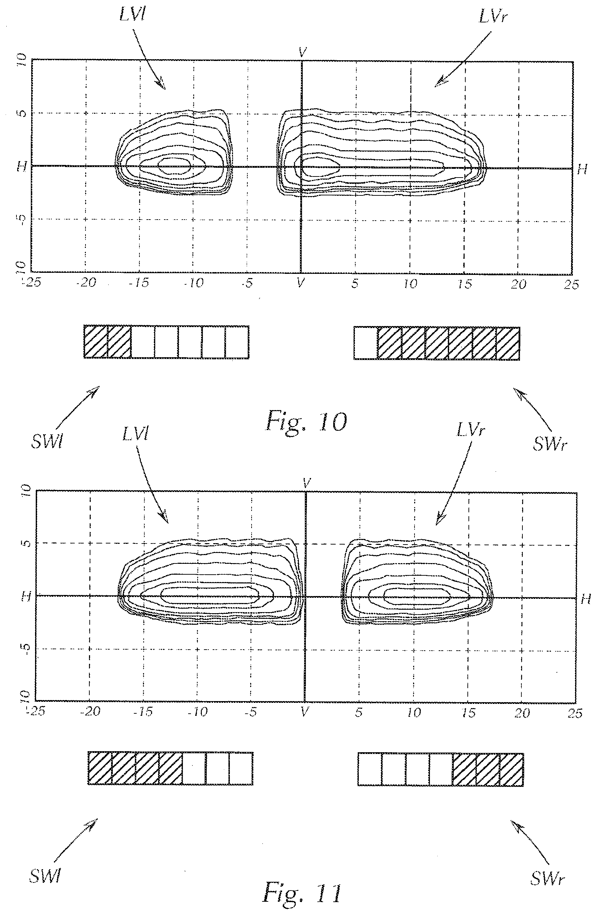

Figur 10 und Figur 11 zeigen ein Fernlicht erzeugt mit einem Scheinwerfersystem bestehend aus einem linken und einem rechten Scheinwerfer, wobei jeder Scheinwerfer eine erfindumgsgemäße Beleuchtungsvorrichtung etwa mit 7 Leuchteinheiten umfasst.

Der linke Scheinwerfer SW1 erzeugt die linke Lichtverteilung LV1, der rechte Scheinwerfer SWr die rechte Lichtverteilung LVr. Wie schematisch angedeutet verfügt jeder Scheinwerfer SW1, SWr je über 7 Leuchteinheiten, welche in der Überlagerung die jeweilige Lichtverteilung ergeben.

Vorzugsweise überlappen sich dabei der linke und der rechte Teil LV1, LVr der Gesamtlichtverteilung - in horizontaler Richtung gesehen - in der Mitte. Beispielsweise liegt der Überlappungsbereich von linker und rechter Lichtverteilung bei ca. 3° in horizontaler Richtung. Je größer der Überlappungsbereich ist, umso schwieriger sind in diesem Überlappungsbereich Segmente im Gesamtlichtbild (vollständig) ausblendbar.

Wie in Figur 10 angedeutet ist, sind bei dem linken Scheinwerfer SW1 nur die beiden äußerten Leuchteinheiten aktiviert (schraffiert dargestellt), bei dem rechten Scheinwerfer SWr leuchten alle Leuchteinheiten bis auf die innerste Leuchteinheit. Damit ergibt sich die in Figur 10 gezeigte Gesamtlichtverteilung mit einem ausgeblendeten Bereich im Lichtbild, die vertikalen Hell-Dinkel-Grenzen zur scharfen Abgrenzung zwischen beleuchtetem und unbeleuchtetem Bereich sind gut zu erkennen.

Figur 11 zeigt eine Gesamt-Lichtverteilung, bei welcher die vier äußerten Leuchteinheiten des linken Scheinwerfer SW1 aktiviert sind, bei dem rechten Scheinwerfer SWr sind die drei äußersten Leuchteinheiten aktiviert. Entsprechend befindet sich der ausgeblendeten Bereich in dem rechten Teil der Gesamtlichtverteilung.

Die hier beanspruchte Beleuchtungsvorrichtung vermag die gängigen gesetzlichen Bestimmungen z.B. der SAE-, CCC- oder ECE-Regelung, zu erfüllen.

## Patentansprüche

1. Beleuchtungsvorrichtung (1) für einen Scheinwerfer eines Kraftfahrzeuges, umfassend zwei oder mehrere Leuchteinheiten (2), wobei jede Leuchteinheit (2) umfasst:
* zumindest einen Reflektor (3), sowie
* zumindest eine dem zumindest einen Reflektor (3) zugeordnete und horizontal seitlich des Reflektors (3) angeordnete Lichtquelle (4),
- wobei Licht aus der zumindest einen Lichtquelle (4) über den zugeordneten zumindest einen Reflektor (3) - im eingebauten Zustand der Beleuchtungsvorrichtung (1) - in einen Bereich vor dem Fahrzeug abgestrahlt wird, und
- wobei die Teil-Lichtverteilungen der zwei oder mehr Leuchteinheiten (2) eine Lichtverteilung der Beleuchtungsvorrichtung (1) bilden,
- wobei die Teil-Lichtverteilungen der einzelnen Leuchteinheiten (2) in horizontaler Richtung nebeneinander angeordnet sind, und wobei die Reflektoren (3) der Leuchteinheiten (2) derart ausgebildet sind, dass die Teil-Lichtverteilungen der Leuchteinheiten (2) jeweils zumindest eine scharf abgebildete vertikale Hell-Dunkel-Grenze aufweisen,
- wobei die Reflektoren (3) in Gruppen mit jeweils zumindest einem Reflektor unterteilt sind, und wobei die Reflektoren derart ausgebildet sind, dass alle Leuchteinheiten (2) mit Reflektoren einer Gruppe ein von der Form her im Wesentlichen identisches Teil-Lichtbild erzeugen, sich die Teil-Lichtbilder von Leuchteinheiten (2) mit Reflektoren aus unterschiedlichen Gruppen voneinander unterscheiden,
- wobei der Lichtquelle (4) einer Leuchteinheit (2) jeweils zumindest eine Strahlenblende (5) zugeordnet ist,
**dadurch gekennzeichnet, dass**
zumindest ein Reflektor zur Ausbildung einer Teil-Lichtverteilung mit zwei vertikalen Hell-Dunkel-Grenzen eingerichtet ist, wobei die Teil-Lichtverteilungen benachbarter Leuchteinheiten (2) unmittelbar aneinander angrenzend oder einander überlappend abgebildet werden.

2. Beleuchtungsvorrichtung nach Anspruch 1, **dadurch gekennzeichnet, dass** alle Reflektoren (3) derart ausgebildet sind, dass die Teil-Lichtverteilungen zwei vertikale Hell-Dunkel-Grenzen aufweisen.

3. Beleuchtungsvorrichtung nach einem der Ansprüche 1 oder 2, **dadurch gekennzeichnet, dass** die Lichtquellen (4) der Leuchteinheiten (3) jeweils zumindest eine, vorzugsweise zwei oder mehrere Leuchtdioden umfassen.

4. Beleuchtungsvorrichtung nach einem der Ansprüche 1 bis 3, **dadurch gekennzeichnet, dass** die Lichtquellen (4) der Leuchteinheiten (3) unabhängig voneinander ansteuerbar sind.

5. Beleuchtungsvorrichtung nach Anspruch 3 oder 4, **dadurch gekennzeichnet, dass** bei zwei oder mehreren Leuchtdioden für eine Lichtquelle die Leuchtdioden unabhängig voneinander ansteuerbar sind oder die Leuchtdioden in Gruppen zusammengefasst sind, und die einzelnen Gruppen unabhängig voneinander ansteuerbar sind.

6. Beleuchtungsvorrichtung nach einem der Ansprüche 1 bis 5, **dadurch gekennzeichnet, dass** eine oder mehrere der Lichtquellen (4), insbesondere die Leuchtdioden dimmbar sind.

7. Beleuchtungsvorrichtung nach einem der Ansprüche 1 bis 6, **dadurch gekennzeichnet, dass** alle Lichtquellen (4) auf einem gemeinsamen Montagekörper angeordnet sind.

8. Beleuchtungsvorrichtung nach einem der Ansprüche 1 bis 7, **dadurch gekennzeichnet, dass** die Reflektoren (3) bzw. Leuchteinheiten (2) in einer horizontalen Ebene angeordnet sind.

9. Beleuchtungsvorrichtung nach einem der Ansprüche 1 bis 8, **dadurch gekennzeichnet, dass** die Leuchteinheiten (2) in horizontaler Richtung zueinander verdreht sind.

10. Beleuchtungsvorrichtung nach Anspruch 9, **dadurch gekennzeichnet, dass** beginnend bei einer äußeren Leuchteinheiten (2) bei einem Fortschreiten zu der inneren Leuchteinheiten (2) der Grad der Verdrehung zunimmt.

11. Scheinwerfer für ein Kraftfahrzeug, umfassend zumindest eine Beleuchtungsvorrichtung (1) nach einem der Ansprüche 1 bis 10.

12. Scheinwerfersystem mit einem linken und einem rechten Scheinwerfer nach Anspruch 11 zur Erzeugung einer Gesamtlichtverteilung, wobei der linke Scheinwerfer den linken Teil der Gesamtlichtverteilung und der rechte Scheinwerfer den rechten Teil der Gesamtlichtverteilung erzeugt.

13. Scheinwerfersystem nach Anspruch 12, **dadurch gekennzeichnet, dass** der linke und der rechte Teil der Gesamtlichtverteilung in der Mitte, in horizontaler Richtung gesehen, überlappen.

## Claims

1. A lighting device (1) for a headlight of a motor vehicle, comprising
two or more lighting units (2), wherein each lighting unit (2) comprises:
• at least one reflector (3) and
• at least one light source (4) paired with the at least one reflector (3) and arranged laterally with respect to the at least one reflector (3),
wherein light from the at least one light source (4) is emitted into a region in front of the vehicle via the corresponding at least one reflector (3) in the installed state of the lighting device (1), and
wherein the sub-light distributions of the two or more lighting units (2) form a light distribution of the lighting device (1),
wherein the sub-light distributions of the individual lighting units (2) are arranged adjacently to one another in the horizontal direction, and wherein the reflectors (3) of the lighting units (2) are designed in such a way that the sub-light distribution of each lighting unit (2) has at least one sharp vertical light-dark boundary,
wherein the reflectors (3) are divided into groups each having at least one reflector, and wherein the reflectors are designed in such a way that all lighting units (2) with reflectors of a group produce a sub-light exposure of substantially identical form, and the sub-light exposures of lighting units (2) with reflectors from different groups differ from one another,
wherein the light source (4) of a lighting unit (2) is paired with at least one beam shield (5),
**characterized in that** the at least one reflector is configured to build a sub-light distribution with two vertical light-dark boundaries, wherein the sub-light distributions of adjacent lighting units (2) are portrayed bordering one another directly or overlapping one another.

2. The lighting device according to Claim 1, **characterised in that** all reflectors (3) are designed in such a way that the sub-light distributions have two vertical light-dark boundaries.

3. The lighting device according to Claim 1 or 2, **characterised in that** the light sources (4) of the lighting units (3) each comprise at least one light-emitting diode, preferably two or more light-emitting diodes.

4. The lighting device according to one of Claims 1 to 3, **characterised in that** the light sources (4) of the lighting units (3) can be actuated independently of one another.

5. The lighting device according to Claim 3 or 4, **characterised in that**, with two or more light-emitting diodes for a light source, the light-emitting diodes can be actuated independently of one another or the light-emitting diodes are combined in groups and the individual groups can be actuated independently of one another.

6. The lighting device according to one of Claims 1 to 5, **characterised in that** one or more of the light sources (4), in particular the light-emitting diodes, can be dimmed.

7. The lighting device according to one of Claims 1 to 6, **characterised in that** all light sources (4) are arranged on a common mounting body.

8. The lighting device according to one of Claims 1 to 7, **characterised in that** the reflectors (3) or lighting units (2) are arranged in a horizontal plane.

9. The lighting device according to one of Claims 1 to 8, **characterised in that** the lighting units (2) are rotated relative to one another in the horizontal direction.

10. The lighting device according to Claim 9, **characterised in that** the degree of rotation increases starting with an outer lighting unit (2) with a continuation to the inner lighting units (2).

11. A headlight for a motor vehicle, comprising at least one lighting device (1) according to one of Claims 1 to 10.

12. A headlight system with a left and a right headlight according to Claim 11 for producing an overall light distribution, wherein the left headlight produces the left part of the overall light distribution and the right headlight produces the right part of the overall light distribution.

13. The headlight system according to Claim 12, **characterised in that** the left and the right part of the overall light distribution overlap in the middle, as considered in the horizontal direction.

## Revendications

1. Dispositif d'éclairage (1) pour un phare d'un véhicule automobile, comportant au moins deux unités d'éclairage (2), chaque unité d'éclairage (2) comportant:
• au moins un réflecteur (3), ainsi qu'
• au moins une source lumineuse (4) associée à l'au moins un réflecteur (3) et disposée latéralement au réflecteur (3) suivant une direction horizontale,
dans lequel de la lumière provenant de la au moins une source lumineuse (4) est émise dans une région à l'avant du véhicule par l'intermédiaire du au moins un réflecteur (3) associé - dans l'état monté de l'appareil d'éclairage (1), et
dans lequel les sous-distributions de lumière des au moins deux unités d'éclairage (2) forment une distribution de lumière du dispositif d'éclairage (1),
dans lequel les sous-distributions de lumière des unités d'éclairage individuelles (2) sont disposées de façon adjacente l'une à l'autre dans la direction horizontale, et dans lequel les réflecteurs (3) des unités d'éclairage (2) sont formés de telle sorte que les sous-distributions de lumière des unités d'éclairage (2) présentent chacune au moins une coupure clair-obscur verticale représentée de façon nette,
dans lequel les réflecteurs (3) sont divisés en groupes ayant chacun au moins un réflecteur, et
dans lequel les réflecteurs sont formés de telle sorte que toutes les unités d'éclairage (2) avec des réflecteurs d'un groupe produisent une sous-image lumineuse sensiblement identique en termes de forme, et les sous-images lumineuses des unités d'éclairage (2) avec des réflecteurs provenant de groupes différents diffèrent l'une de l'autre,
dans lequel la source lumineuse (4) d'une unité d'éclairage (2) est associée à respectivement au moins un écran (5) de protection contre le rayonnement,
**caractérisé par le fait qu'**au moins un réflecteur est agencé pour la formation d'une sous-distribution de lumière avec deux coupures clair-obscur verticales, dans lequel les sous-distributions de lumière d'unités d'éclairage (2) adjacentes se touchant l'une l'autre directement ou se chevauchant l'une l'autre.

2. Dispositif d'éclairage selon la revendication 1, **caractérisé par le fait que** tous les réflecteurs (3) sont formés de telle sorte que les sous-distributions de lumière présentent deux coupures clair-obscur verticales.

3. Dispositif d'éclairage selon l'une des revendications 1 ou 2, **caractérisé par le fait que** les sources lumineuses (4) des unités d'éclairage (3) comportent chacune au moins une, de préférence au moins deux diodes électroluminescentes.

4. Dispositif d'éclairage selon l'une des revendications 1 à 3, **caractérisé par le fait que** les sources lumineuses (4) des unités d'éclairage (3) sont aptes à être commandées indépendamment l'une de l'autre.

5. Dispositif d'éclairage selon l'une des revendications 3 ou 4, **caractérisé par le fait que**, dans le cas d'au moins deux diodes électroluminescentes pour une source lumineuse, les diodes électroluminescentes sont aptes à être commandées indépendamment l'une de l'autre ou les diodes électroluminescentes sont réunies en groupes, et les groupes individuels sont aptes à être commandés indépendamment l'une de l'autre.

6. Dispositif d'éclairage selon l'une des revendications 1 à 5, **caractérisé par le fait qu'**au moins l'une des sources lumineuses (4), en particulier des diodes électroluminescentes, sont à intensité variable.

7. Dispositif d'éclairage selon l'une des revendications 1 à 6, **caractérisé par le fait que** toutes les sources lumineuses (4) sont disposées sur un corps de montage commun.

8. Dispositif d'éclairage selon l'une des revendications 1 à 7, **caractérisé par le fait que** les réflecteurs (3) ou les unités d'éclairage (2) sont disposés dans un plan horizontal.

9. Dispositif d'éclairage selon l'une des revendications 1 à 8, **caractérisé par le fait que** les unités d'éclairage (2) sont tournées l'une vers l'autre en direction horizontale.

10. Dispositif d'éclairage selon la revendication 9, **caractérisé par le fait que** le degré de la rotation augmente en commençant par une unité d'éclairage (2) externe en progressant vers les unités d'éclairage (2) internes.

11. Phare pour un véhicule automobile, comportant au moins un dispositif d'éclairage (1) selon l'une des revendications 1 à 10.

12. Système de phares avec un phare gauche et un phare droit selon la revendication 11 pour produire une distribution totale de lumière, dans lequel le phare gauche produit la partie gauche de la distribution totale de lumière et le phare droit produit la partie droite de la distribution totale de lumière.

13. Système de phares selon la revendication 12, **caractérisé par le fait que** la partie droite et la partie gauche de la distribution totale de lumière se chevauchent au centre, tel que considéré dans la direction horizontale.
